Europäisches Patentamt

European Patent Office

Office européen des brevets

(19)

(11) **EP 1 271 509 A1**

(12) **EUROPEAN PATENT APPLICATION**

(43) Date of publication:
**02.01.2003 Bulletin 2003/01**

(51) Int Cl.$^7$: **G11B 20/10**, G11B 20/18

(21) Application number: **01830422.0**

(22) Date of filing: **22.06.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **STMicroelectronics S.r.l.**
**20041 Agrate Brianza (Milano) (IT)**

(72) Inventors:
• **Betti, Giorgio**
  **20010 Pogliano Milanese(MI) (IT)**

• **Brenna, Filippo**
  **20050 Villa Raverio (MI) (IT)**
• **Dati, Angelo**
  **55049 Viareggio (LU) (IT)**
• **Rossi, Augusto**
  **San Diego, CA 92122 (US)**
• **Reggiani, Lucca**
  **44100 Ferrara (IT)**

(74) Representative: **Mittler, Enrico**
  **c/o Mittler & C. s.r.l.,**
  **Viale Lombardia, 20**
  **20131 Milano (IT)**

(54) **Method and apparatus for detecting and correcting errors in a magnetic recording channel of a mass storage system**

(57)     The present invention relates to a method and apparatus for detecting and correcting errors in a magnetic recording channel of a mass storage system, that combines a Soft Output Viterbi Algorithm SOVA (39), having the capability of detecting the reliability of a discrete, equalized signal (38), and a post processor (37), having the capability of detecting specific error events in said discrete, equalized signal (38), so as to correct said error events and to generate an output bit stream (48).

Fig.6

EP 1 271 509 A1

**Description**

The present invention relates to a method and apparatus for detecting and correcting errors in a magnetic recording channel of a mass storage system, particularly but non exclusively for detecting and correcting errors in a magnetic recording channel of a hard disk drive (HDD).

As computer hardware and software technology continues to progress, the need for larger and faster mass storage devices continues to increase.

To meet these ever increasing demands, hard disk drives (HDDs) continue to evolve and advance.

A HDD performs write and read operations when storing and retrieving data. A typical HDD performs a write operation by transferring data from a host interface to its control circuitry.

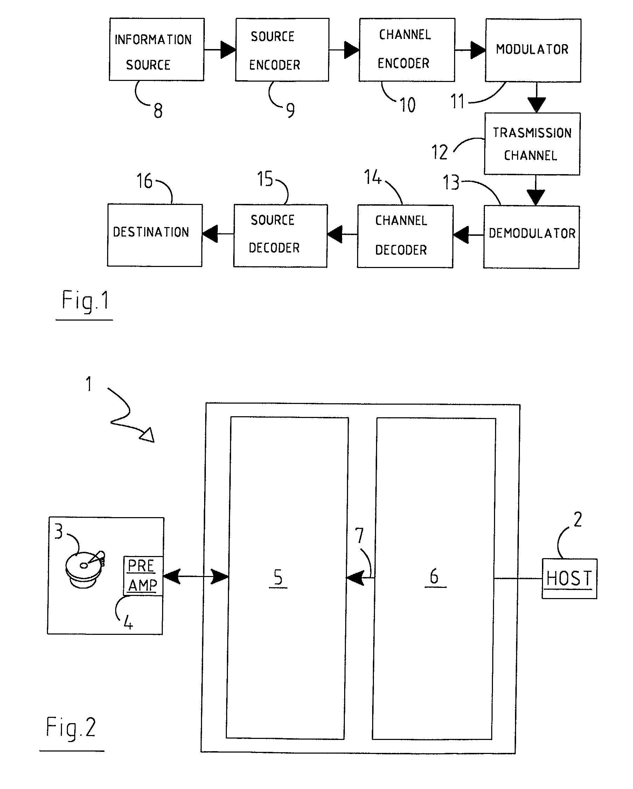

A model of a prior art digital communication system is illustrated in Figure 1. Information source 8 generates either analog or discrete information which the source encoder 9 encodes into an information sequence x. A channel encoder 10 transforms the information sequence x into a new sequence x' by means a process known as channel encoding. A modulator 11 uses the encoded output to generate channel signals for transmission over a transmission channel 12.

In general, the transmission channel 12 exhibits noise and other impairments, for example frequency and phase distortion and a variety of fading characteristics. A digital demodulator 13 demodulates the transmitted signal to produce an estimate of the encoded information sequence x'. A channel decoder 14 then takes this estimate and attempts to reproduce the information sequence. Finally, a source decoder 15 transforms the reconstructed information sequence x' into a form suitable for an information destination 16.

The channel encoding 10 is a means to efficiently introduce redundancy into a sequence of data and to promote the reliability of the transmissions.

There are some ways in which the redundant information may be used to improve the accuracy or the reliability of the received information, such as, for example, the error detection, wherein the decoder determines only whether the received sequence is correct or if errors have occurred, or such as the error correction, wherein the decoder uses the redundant information to both detect and correct errors in the received sequence, or such as the automatic request, wherein the detection of an error will automatically initiate a request of repeat data.

Particularly, an error correction code, such as Reed - Solomon code, is able to detect the wrong bytes and to correct them. Moreover such a code adds to the transmitting data a few bytes of redundancy. In fact with "2t" bytes of redundancy it is possible to correct until "t" wrong bytes.

Moreover to the error correction code, a code of cyclic redundancy check type (CRC) is added, that allows to verify the consistency of data, because the Reed - Solomon code can sometimes make wrong corrections.

The channel code, instead, can introduce an appropriate modulation, in function of the used transmission channel.

Usually the channel decoder 14 implements the so called

Viterbi Algorithm. The Viterbi Algorithm is a well known method for decoding convolutional codes. In fact the Viterbi Algorithm is the optimum decoding algorithm in the sense of maximum likelihood estimation for a convolutionally encoded sequence transmitted over a memoryless channel, such as the channel shown in Figure 1.

The basic theoretical concept of the Viterbi Algorithm can be described as correlating all possible transmitted code sequences with the received sequence and then choosing as the "survivor" the sequence where the correlation is maximum, i. e., the path with the best "metric".

Figure 2 is a block diagram of a hard disk drive mass storage system 1 used for retrieving data during read operations and for storing data during write operations. Hard disk drive mass storage system 1 interfaces and exchanges data with a host 2 during read and write operations. Hard disk drive mass storage system 1 includes a disk - head assembly 3, a preamplifier 4, a synchronous data sampler 5 and a control circuitry 6.

Disk - head assembly 3 and preamplifier 4 are used to magnetically store data. Synchronous data sampler 5 and the control circuitry 6 are used to process data, that is being read from and written to disk - head assembly 3 and to control the various operations of the hard disk drive mass storage system 1. Host 2 exchanges digital data with control circuitry 6.

Synchronous data sampler 5 is used during read and write operations to exchange analog data signals with disk - head assembly 3 through preamplifier 4 and to exchange digital data signals with control circuitry 6 through a data - parameter path 7.

In the read - write channels of the HDD, for example, the channel code is studied in a way to allow the exclusion of particular error events, and to improve in this way the Bit Error Rate (BER) of the hard disk drive mass storage system 1. The error events are wrong sequences that statistically tend to repeat themselves, due to the same condition of the Signal to Noise Ratio (SNR).

For the read - write channel of the hard disk drive mass storage system 1, for example, the error events more relevant, for medium - low values of the SNR. are listed in the following table 1:

| Transmission Sequence | Received Sequence | Error Events |
|:---:|:---:|:---:|
| ...xx1xx... | ...x0xx... | + |
| ...x101x... | ...x010x... | +-+ |
| ...xx10xx... | ...xx01xx... | +- |

As shown in the table 1, the error event more common is that wherein a single bit is not correct.

A simple way to reduce the number of the committed errors during a reading operation of stored information consists in the use of a parity channel code, wherein to each digital word of the code is added a bit, the value of which is so as to make even the number of ones, belonging to said digital word.

In view of the state of the art described, it is in object of the present invention to increase the efficiency of the detector of a recording channel of a mass storage system.

According to the present invention, such object is attained by a method for detecting and correcting errors in a sequence of signals, said method comprising the steps of: a) receiving said signals over a communication channel corrupted by noise; b) transforming said signals into discrete signals equalized to a predetermined target function; c) computing a bit stream and the associated reliability of said discrete signals; d) postprocessing said bit stream and said reliability in function of said discrete signals to detect specific error events; e) making correction of said error events by filtering each single error event; f) generating an output bit stream.

According to the present invention, such object is also attained by an apparatus for detecting and correcting errors in a magnetic recording channel of a mass storage system, characterized by comprising a block implementing a Soft Output Viterbi Algorithm operable to receive a discrete equalized signal and to generate a bit stream and to associate a reliability to said bit stream; a delay line operable to receive said discrete equalized signal and to generate a delayed version of said discrete equalized signal; a post processor operable to receive said bit stream, said associated reliability and said delay version of said discrete equalized signal, said post processor operable to generate a first signal; an error correction block operable to receive said first signal and operable to generate an output bit stream.

Thanks to the present invention it is possible to combine a SOVA detector and a post processor so to make full use of the characteristics of the parity channel code.

The features and the advantages of the present invention will be made evident by the following detailed description of few its particular embodiments, illustrated as not limiting example in the annexed drawings, wherein:

Figure 1 shows a schematic block diagram of a digital communication system according to the prior art;
Figure 2 shows a block diagram illustrating a hard disk drive mass storage system according to the prior art;
Figure 3 shows a block diagram of a read - write channel according to the prior art;
Figure 4 shows a state machine and a correspondent trellis according to the prior art;
Figure 5 shows a block diagram of a post processor according to the prior art;
Figure 6 shows a block diagram of a combination between a SOVA detector and a post processor according to the present invention;
Figure 7a shows an error identification on a bit stream according to the present invention;
Figure 7b shows an error correction on the same bit stream of Figure 7a according to the present invention;
Figure 8 shows another block diagram of a combination between a SOVA detector and a post - processor according to the present invention;
Figure 9 shows a table of a data sector of a device of Figure 8 according to the present invention;
Figure 10 shows a flow chart of the method according to the present invention.

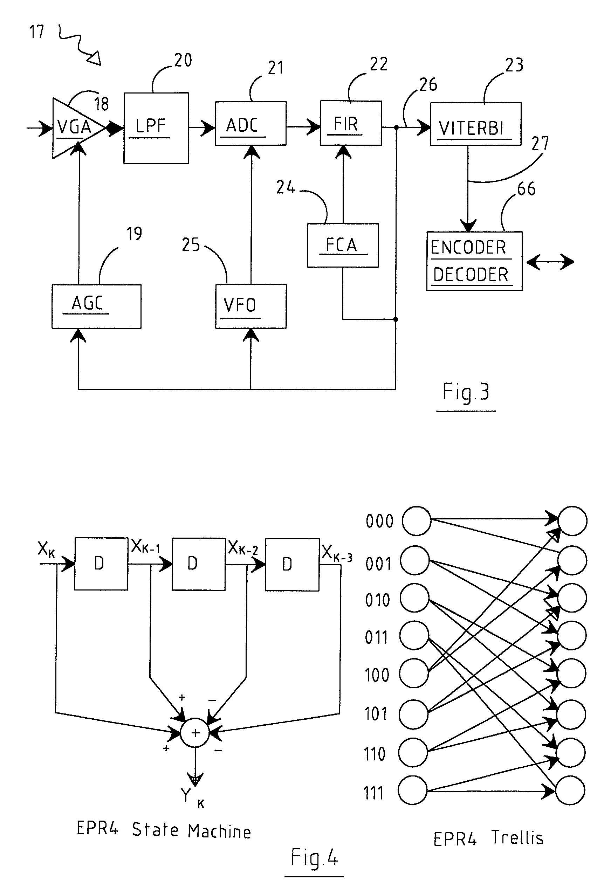

Figure 3 is a block diagram of a read - write channel according to the prior art.

Referring back to Figure 2, it is to be noted that the synchronous data sampler 5 includes besides other devices, such as a read - write channel 17 that is depicted in Figure 3.

Read - write channel 17 is composed by a variety of circuit modules used to process and condition an analog signal received from the preamplifier 4 and the disk - head assembly 3. The circuit modules of the read - write channel 17 include a variable gain amplifier (VGA) 18, an automatic gain control (AGC) 19, a low pass filter (LPF) 20, an analog to digital converter (ADC) 21, a finite response filter (FIR) 22, a Viterbi detector 23, a filter coefficients adaptation (FCA) 24, a variable frequency oscillator (VFO) 25 and an encoder - decoder circuit 66.

All these circuit modules are used during read - write operation to perform various functions and to condition the analog read signal so that the corresponding digital data signal is provided to the control circuitry 6 and ultimately to the host 2.

Due to optimize the equalization, the impulsive answer of the channel 17 is modeled so as to correspond to a predefined sequence, that is usually indicated as "target". To every target corresponds a finite state machine, that describes the ideal outputs of the channel 17 to every state and to every input.

For example, as Figure 4 shown, if the read - write channel 17 is implemented as a partial response, class IV (EPR4), the algorithm implemented in the Viterbi detector 23 uses the same state machine. In fact the Figure 4 shows the state machine corresponding to the target EPR4 and the corresponding trellis, that describes the evolution of the state machine in the time.

Moreover the polynomial implemented in the Figure 4, as target of operation of equalization, is a polynomial of the third order, such as:

$$P(D) = 1 + D - D^2 - D^3 \qquad (1)$$

Therefore the corresponding state machine will evolve through eight states.

Particularly, referring again to Figure 3, the Viterbi detector 23 receives a discrete equalized signal 26 from the FIR 22 and the Viterbi detector 23 analyzes said signal 26 to produce an output digital data signal 27 corresponding to the data stored on the disk - head assembly 3.

A so called hard or soft decision schemes may be employed to determine the best path trough the trellis. In a hard decision scheme, the metric may be defined as the Hamming distance between the received digital word and the outputs. In a soft decision scheme also called Soft Output Viterbi Algorithm (SOVA), the Hamming metric is replaced by a soft decision metric, such as, for example, the computing of the likelihood of the candidate paths given knowledge of the probability distribution of the received signal 26 at the Viterbi detector 23.

Moreover, if it is known the position of the all bytes or only the position of some bytes, it is possible to improve the correction capability and therefore to reconstruct correctly the data.

If the Viterbi detector 23 is a SOVA type, in presence of uncorrectable wrong transmissions, it is possible to implement an iterative strategy consisting in the selection of one or more bytes that have reliability values less of a predetermined threshold.

At this point, fixed one or more error positions, called erasures, the correction capability increases.

However the information quality provided by the SOVA detector 23, and therefore the capability of the system to identify the possible wrong bytes, decreases at the decreasing of the Signal to Noise Ratio (SNR).

Moreover, it is possible, assuming that to the "k" user bytes are added "2 t" redundancy bytes, to correct until "t" errors by means of the Reed - Solomon detector, supposing that it is not known the position of the wrong bytes.

However, if the wrong bytes are "t + 1", it is not possible to reconstruct the transmitted user bytes.

It is to be noted, further, due to the elevated date rate requested in the modern HDD (more than 700 Mbit / sec), the solutions wherein some characteristics of the channel code are enclosed in the Viterbi detector 23 may limit heavily the data rate.

Therefore, as it is known to a skilled person, it is easier to add to the Viterbi detector a block that makes a post processing suitable to the decisions of the Viterbi detector.

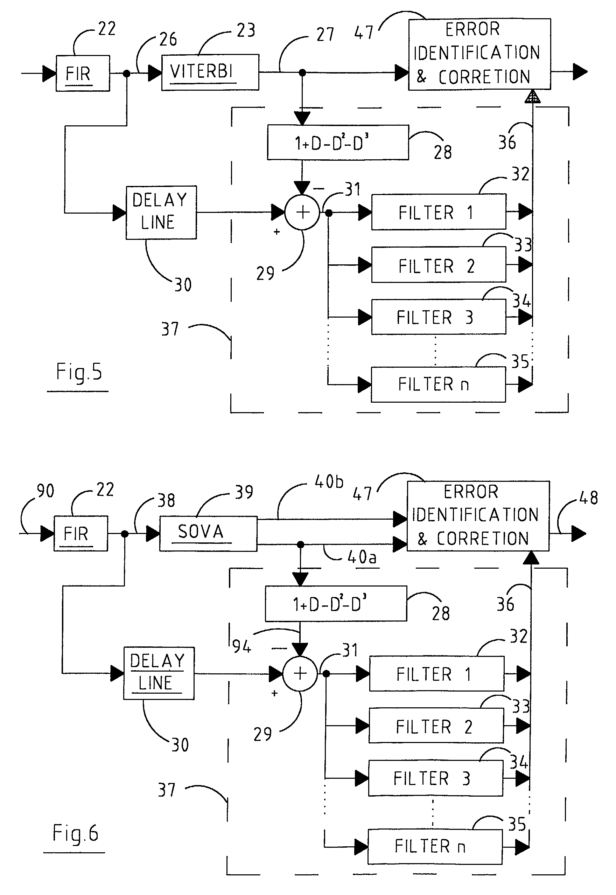

Figure 5 shows a such well known architecture, wherein the hard outputs of the Viterbi detector 23 are filtered by means of a post processor 37, that particularly includes an identical polynomial P(D), used for the equalization operation, and a group of filters 32, ..., 35.

In this specific embodiment a target EPR4 is used and therefore the polynomial 28 is again:

$$P(D) = 1 + D - D^2 - D^3 \qquad (2)$$

By means of the adder node 29 the output samples 28 are subtracted to real output samples of the FIR 22, wherein this last are opportunely delayed by means of a delay line 30.

In this way the output signal 31 of the adder node 29, in absence of errors by Viterbi detector 23, is a pure white noise.

If the Viterbi detector 23 makes a wrong decision, the output signal 31 will have special characteristics in function of the error event.

Said group of filters 32, ..., 35 is tuned in a specific error event, so to recognize which error event is happened in said output signal 31 and where in the bit stream.

The deduced data 36 is used by an error correction block 47, making the needed correction.

However, such a embodiment has two kind of problems: 1) a detection problem, that is it isn't always possible to detect all the error events; 2) a miscorrection problem, that is sometime the correction made by the post processor is wrong and therefore the resulting BER can be equal or higher than the output BER of the Viterbi detector 23.

In fact, if a single parity bit channel code is implemented, the error events, such as "+" or "-" (wherein in a sequence "... 1 0 ..." is performed as "... 0 1..."), are not detected because they do not modify the parity.

Error events, such "+" or "+ - +", are detectable because they modify the parity, but the post processor could confuse them, if the associated energy to the error events it is not sufficiently high to allow a suitable discrimination.

In Figure 6 a block diagram of a combination between a SOVA detector and a post - processor, that makes full use of the characteristics of a parity channel code according to the present invention, is shown.

Wherever possible, the same reference numbers of Figure 5 are used in Figures 6 and the description to refer to the same or like parts.

The FIR 22 receives a signal 90 from the disk - head assembly 3 and said FIR 22 generates a discrete, equalized signal 38 that is input to a SOVA 39 and to the delay line 30.

The output 40 of the SOVA 39 is a stream of bits 40a and the associated reliability 40b.

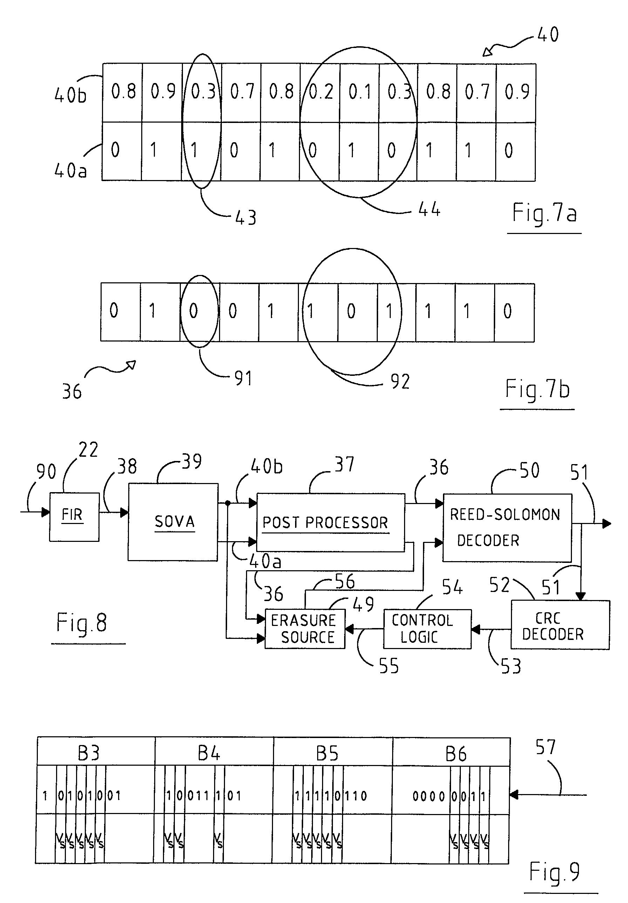

In the specific embodiment the reliability of each bit is measured by a number comprised between zero, that is the lower reliability, and one, that is the higher reliability, as described hereinafter in Figure 7a and Figure 7b.

The outputs 40a and 40b of the SOVA 39 are filtered by means of the post processor 37, that particularly includes an identical polynomial P(D), used for the equalization operation, and the group of filters 32, ..., 35.

Even in this specific embodiment a target EPR4 is used and therefore the polynomial 28 is:

$$P(D) = 1 + D - D^2 - D^3 \qquad\qquad (2)$$

The polynomial 28 generates a new sequence 94 that represents the ideal samples generated by the FIR 22 if the transmission channel 12 is noiseless.

By means of the adder node 29 the output samples 94 are subtracted to real output samples of the FIR 22, wherein this last are opportunely delayed by means of the delay line 30.

In such a embodiment, the SOVA 39 gives to the Post processor 37 a list of possible error events, and moreover said SOVA 39 gives the position of said possible error events, highlighting opportunely each bit, the reliability value whenever is less of a predetermined threshold.

In this way, the post processor 37, taking into account the obtained syndrome and recalculating the parity of the bit stream, generated from the SOVA 39, produces in turn a list of possible error events, without knowing the position of said possible error events.

As consequence, the combination of the list generated by the SOVA 39 and by the post processor 37 reduces the number of undetectable error events, because, for example, the SOVA 39 can identify some errors that do not violate the parity and therefore they are undetectable by the post processor 37.

Moreover, this combination reduces the number of miscorrection, because sometimes it is possible to have a double identification of the error event.

Moreover, if the number of wrong bytes exceeds the correction capacity, the inventive embodiment generates some erasures, combining again the data reliability of the SOVA 39 with that of the post processor 37.

In this way the deduced data 36 is used from the error correction block 47 to make the needed correction.

As Figures 7a shows, the bit stream 40 generated by the SOVA 39 is dived into two streams 40b and 40a, wherein the stream 40b represents the reliability of the bit stream 40 and the stream 40a represents the bits of the bit stream 40.

In Figure 7b the data 36 is depicted, that is there is a representation of the bit stream 40 after an operation of the error correction, made by the group of filter 32,..., 35.

In particularly, referring to the figure 7a, the bit stream 40 shows two error events 43 and 44, respectively, an error event 43 such as "-", that is a bit 0 is interpreted as a bit 1, as shown in Figure 7b, position 91, and an error event 44 such as "+, -, +", that is a bit sequence 101 is interpreted as 010, as shown in Figure 7b, position 92.

With embodiments of the prior art, such as with a bit parity correction technique or only with a SOVA detector, the two error events 43 and 44 should be not detectable.

In fact, in the case of a bit parity correction technique the two error events 43 and 44 should be not detectable because the total parity of the bit stream 40 is maintained, and in the case of a SOVA detector the two error events 43 and 44 should be not detectable because the SOVA gives only information about the reliability of the data.

With the inventive embodiment, that is combining the SOVA 39 and the post processor 37, the Applicant has found that integrating the capability of the SOVA 39, that is the capability of detecting the reliability of the data 38, and the capacity of the post processor 37, that is the capability of detecting specific error events, it is possible to correct the error events such as 43 and 44.

In fact, in the group of filters 32, ..., 35, there will be a filter tuned on the single error event "+", another filter tuned on the error event "+, -, +", another filter tuned on the error event "+, -" and so on.

In this way the filters tuned on the specific error events allow to detect the presence and the exact position of the error events in the bit stream 40, so to the error identification and correction block 47 generates an error free bit stream 48.

However the group of filters 32, ..., 35 of the post processor 37 can not identify correctly all the error events presenting on the magnetic recording channel of the mass storage system, because the list of the error events is limited due to obvious reasons.

Insofar, in Figure 8 another block diagram of a combination between a SOVA detector and a Post - Processor according to the present invention is shown.

Wherever possible, the same reference numbers of Figure 6 are used in Figure 8 and the description to refer to the same or like parts.

The FIR 22 receives the signal 90 from the disk - head assembly 3 and said FIR 22 generates a discrete, equalized signal 38 that is input to a SOVA 39. The output 40 of the SOVA 39 is a stream of bits 40a and the associated reliability 40b.

The outputs 40a and 40b of the SOVA 39 are filtered by means of the post processor 37 as described in heretofore in Figure 6.

In such an embodiment, the SOVA 39 gives to the post processor 37 the bit stream 40a and the reliability 40b, whilst the post processor 37 generates the data 36 that inputs to a Reed - Solomon decoder 50 and to an erasure source 49.

The SOVA 39, moreover, gives the reliability 40b of the bit stream 40a to the erasure source 49 and said erasure source 49 produces a signal 56 that is input to said Reed - Solomon decoder 50.

The Reed - Solomon decoder 50 is able to detect the wrong bytes in the output 40 and to correct them. In fact the Reed - Solomon code is a code that adds to the transmitting data a few bytes of redundancy, so as with "2 t" bytes of redundancy it is possible to correct until "t" wrong bytes.

The output 51 of the Reed - Solomon decoder 50 is input in a Cyclic Redundancy Check (CRC) decoder 52, and in turn the output 53 of the CRC decoder 52 is input to a control logic 54. The output 55 of the control logic 54 is input to said erasure source 49.

In such an embodiment the combination of the SOVA 39 and of the post processor 37 allows to implement another correction step by means of the Reed - Solomon detector 50.

In fact, if a data sector is organized as shown in the following table 2:

| B1 B2 | B3 B4 B5 B6 | B511 B512 ... CS4 CS5... CRC |
| --- | --- | --- |

Sector length            = 512 bytes
Num. check symbols     = 6 bytes = 2t
Num. of correctable errors= t = 3

wherein a burst of four wrong symbols (B3, B4, B5 B6) is highlighted.

In this specific embodiment the redundancy of the Reed - Solomon code "t = 3" allows to correct at the maximum three errors. In this case, being the burst of symbols equal to four, the burst prevents a correct reading of the sector.

However, the capability of correction of the Reed - Solomon code can increase until "2 t" bytes, if the Reed - Solomon code knows the exact position of the wrong symbols.

As Figure 8 shows, there is a series between the Reed - Solomon decoder 50 and the CRC decoder 52.

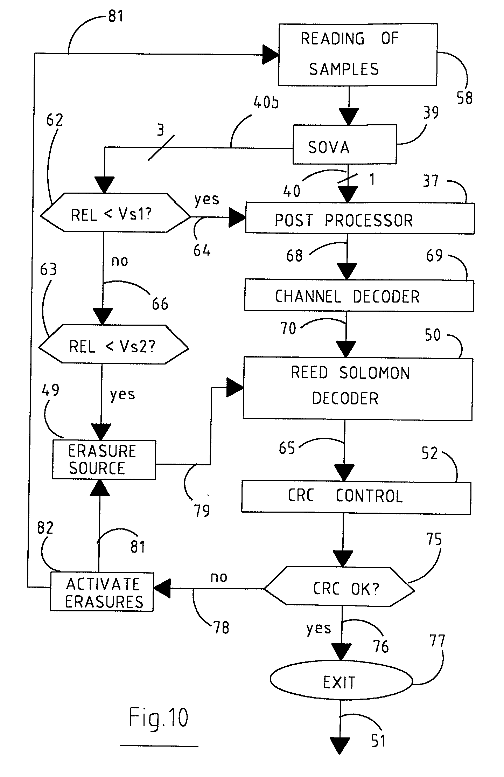

In this way, it is possible to implement a recovery procedure of the wrong sector by means of further redundancy, introduced by the CRC decoder 52, as described heretofore in Figure 10.

Figure 9 shows the burst B3, ..., B6, the associated eight bits 57 and for some of said bits 57, belonging to the wrong bytes B3, ..., B6, there is a particular value Vs of reliability.

For example, the byte B3 is made by the bit stream 10101001 and in particularly the bits one, two, three, four and five (that is 01010) have reliability lower that the threshold value Vs.

The flow chart described in Figure 10 represents the way of operating of the inventive embodiment illustrated in Figure 8.

In fact, after a first step 58 ("READING OF SAMPLES"), adapted for reading of the samples, disposed as depicted in table 2, there is a second step 39, implementing the Soft Output Viterbi Algorithm ("SOVA"), adapted to provide the bit stream 40 (that is the bit of the stream 40a and the associated reliability 40b of said bit stream 40a), having a resolution of one bit, to the post - processor 37 and further the SOVA 39 provides the only reliability information 40b, having a resolution of three bits, to a first test block 62.

In fact, the reliability information 40b is compared with two prefixed threshold Vs1 and Vs2 by means of the two test blocks 62 and 63 (" REL < Vs1 ?", and " REL < Vs2 ?").

If the reliability information 40b is lower that the first threshold value Vs1 an opportune signal, path 64, is delivered to the post processor 37. This last uses the signal 64 to improve the detection.

If the reliability information 40b is higher that the first threshold value Vs1, path 66, the test block 63 is performed.

The test block 63 examines the reliability information 40b and if this reliability information 40b is comprised between the two threshold values Vs1 and Vs2, then the test block 63 activates an erasure source 49 ("ERASURE SOURCE").

The post processor 37, in function of the signal 64 and in function of the output 40 of the SOVA 39, generates a further bit stream 68 that is input to the channel decoder 69.

The channel decoder 69 takes this further bit stream 68 and attempts to reproduce the information sequence 58 into a new sequence 70.

The sequence 70 is input to a Reed - Solomon decoder 50, adapted to detect the wrong bytes in the output 70 and to correct them, providing a further bit stream 65.

The further bit stream 65, provided by the Reed - Solomon decoder 50, is subjected to a CRC control 52.

If the CRC control 52 is correct, path 76 of the test block 75 ("CRC OK ?"), the sequence of the operations is terminated, block 77 ("EXIT"), and therefore the output bit stream 51 is provided.

If the CRC 52 control is wrong, path 78 of the test block 75 ("CRC OK ?"), an opportune signal 81 is released from an erasure block 82 ("ACTIVATE ERASURES"), so as to activate said erasure source block 67 and to restart the sequence of the operations, that is block 58, until the outcome of the control CRC 52 is correct.

**Claims**

1. Method for detecting and correcting errors in a sequence of signals (90), said method comprising the steps of:

   a) receiving said signals (90) over a communication channel corrupted by noise;
   b) transforming said signals (90) into discrete signals (38) equalized to a predetermined target function (28);
   c) computing a bit stream (40a) and the associated reliability (40b) of said discrete signals (38);
   d) postprocessing said bit stream (40a) and said reliability (40b) in function of said discrete signals (38) to detect specific error events (43, 44);
   e) making correction of said error events (43; 44) by filtering (32, 33, 34, 35) each single error event (43; 44);
   f) generating an output bit stream (48).

2. Method for detecting and correcting errors in a sequence of signals according to claim 1, said method modified in the steps (d), (e) and (f) and replaced by the following steps:

   g) comparing the reliability (40b) associated to said bit stream (40a) with at least a prefixed value threshold (Vs1; Vs2);
   h) generating a first signal (64) in the case the comparison of step (g) is lower than said at least prefixed value threshold (Vs1; Vs2);
   i) postprocessing said bit stream (40a) and the associated reliability (40b) in function of said signal (64), so as to provide a new bit stream (68);
   j) adding bytes of redundancy to said new bit stream (68) so as to provide a further bit stream (65);
   k) verifying the consistency of said further bit stream (65);
   l) in the case of the verify of the step (k) is consistency, providing an output bit stream (51);
   m) in the case of the verify of the step (k) is not consistency, repeating the steps from (g) to (l).

3. Method for detecting and correcting errors in a sequence of signals according to claim 2, further comprises the steps of:

   n) providing a second signal (79) in the case of the outcome of the comparison of the step (g) is higher that said at least threshold value (Vs1; Vs2);
   o) adding redundancy bytes to said new bit stream (68) so as to provide a further bit stream (65) in function of said second signal (79);

p) verifying the consistency of said further bit stream (65);

q) in the case of the verify of the step (p) is consistency, providing an output bit stream (51);

r) in the case of the verify of the step (p) is not consistency, repeating the steps from (g) to (k) of the claim 2.

4. Method for detecting and correcting errors in a sequence of signals according to claim 1, **characterized in that** said step (c) is calculated by a Soft Output Viterbi Algorithm (39).

5. Method for detecting and correcting errors in a sequence of signals according to claim 1, **characterized in that** said step (e) is calculated by a group filters (32, 33, 34, 35), each one of which is tuned on a specific error event (43, 44).

6. Method for detecting a sequence of signals according to claim 1, **characterized in that** said step (f) is calculated by a correction block (47).

7. Method for detecting and correcting errors in a sequence of signals according to claim 1 or 2, **characterized in that** said step (d) of claim 1 and said step (i) of the claim 2 are calculated by a post processor (37).

8. Method for detecting and correcting errors in a sequence of signals according to claim 2 or 3, **characterized in that** said step (j) of claim 2 and said step (o) of the claim 3 are calculated by a Reed - Solomon decoder (50).

9. Method for detecting and correcting errors in a sequence of signals according to claim 2 or 3, **characterized in that** said step (e) of the claim 2 and said step (p) of the claim 3 are verified by means of a cyclic redundancy code (73).

10. Apparatus for detecting and correcting errors in a magnetic recording channel of a mass storage system, **characterized in that** to comprise a Soft Output Viterbi Algorithm (39) operable to receive a discrete equalized signal (38) and to generate a bit stream (40a) and to associate a reliability (40b) to said bit stream (40a); a delay line (30) operable to receive said discrete equalized signal (38) and to generate a delayed version of said discrete equalized signal (38); a post processor (37) operable to receive said bit stream (40a), said associated reliability (40b) and said delay version of said discrete equalized signal (38), said post processor (37) operable to generate a first signal (36); an error correction block (47) operable to receive said first signal (36) and operable to generate an output bit stream (48).

11. Apparatus for detecting and correcting errors in a magnetic recording channel according to claim 10, **characterized by** comprising an erasure source (49) operable to receive said associated reliability (40b) of said discrete equalized signal (38) and a third signal (36), said erasure source (49) operable to generate a fourth signal (56); a Reed - Solomon decoder (50) operable to receive said third (36) and fourth signal (56), said Reed - Solomon decoder (50) operable to generate said output bit stream (51); a cyclic redundancy check decoder (52) operable to receive said output bit stream (51), being said cyclic redundancy check decoder (52) operable to generate a fifth signal (53); a control logic block (54) operable to receive said fifth signal (53), said control logic block (54) operable to generate a sixth signal (55), being said sixth signal (55) inputs to said erasure source (49).

12. Apparatus for detecting and correcting errors in a magnetic recording channel according to claim 10, **characterized in that** said post processor (37) comprises an equalization block (28) operable to generate an equalized target (94) of said bit stream (40a) and said associated reliability (40b); an adder node (29) operable to add said equalized target (94) and said delayed version of said discrete equalized signal (38), being said adder node operable to generate a second signal (31); a group of filters (32, 33, 34, 35) operable to receive said second signal (31), said group of filters (32, 33, 34, 35) operable to provide said second signal (31).

13. Apparatus for detecting and correcting errors in a magnetic recording channel according to claim 12, **characterized in that** said group of filters (32, 33, 34, 35) is tuned on a specific error event (43, 44), being present in said second signal (31).

14. Apparatus for detecting and correcting errors in a magnetic recording channel according to claim 12, **characterized in that** said equalization block (28) is implemented by a third order polynomial of the type $P(D) = 1 + D - D^2 - D^3$.

| INFORMATION SOURCE | → | SOURCE ENCODER | → | CHANNEL ENCODER | → | MODULATOR |
|---|---|---|---|---|---|---|

8     9     10     11

12 — TRASMISSION CHANNEL

16    15    14    13

| DESTINATION | ← | SOURCE DECODER | ← | CHANNEL DECODER | ← | DEMODULATOR |
|---|---|---|---|---|---|---|

## Fig.1

1

3

PRE AMP

4

7

5     6

2

HOST

## Fig.2

Fig.3

EPR4 State Machine

EPR4 Trellis

Fig.4

ERROR IDENTIFICATION & CORRETION

22 26 23 27 47

FIR → VITERBI →

$1+D-D^2-D^3$ 28 36

DELAY LINE 31 32

FILTER 1

29 33

FILTER 2

30 34

FILTER 3

37 35

FILTER n

Fig.5

90 22 38 39 40b 47 48

ERROR IDENTIFICATION & CORRETION

FIR → SOVA →

40a

$1+D-D^2-D^3$ 28 36

94 31 32

DELAY LINE

29 FILTER 1

30 33

FILTER 2

37 34

FILTER 3

Fig.6 35

FILTER n

Fig.7a

Fig.7b

Fig.8

Fig.9

Fig.10

**European Patent Office**

# EUROPEAN SEARCH REPORT

Application Number

EP 01 83 0422

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 949 831 A (ELEFTHERIOU EVANGELOS S ET AL) 7 September 1999 (1999-09-07)<br>* abstract *<br>* column 2, line 10 - line 29 *<br>* column 3, line 32 - column 5, line 59; figures 3,4 * | 1-14 | G11B20/10<br>G11B20/18 |
| A | EP 1 054 401 A (TEXAS INSTRUMENTS INC) 22 November 2000 (2000-11-22)<br>* the whole document * | 1-14 | |
| A | US 5 689 532 A (FITZPATRICK KELLY K) 18 November 1997 (1997-11-18)<br>* abstract *<br>* column 8, line 23 - column 15, line 35; figures 5-8 * | 1-14 | |
| A | WO 00 07187 A (CIRRUS LOGIC INC) 10 February 2000 (2000-02-10)<br>* figures 5,8A,8B * | 1-14 | |
| A | US 6 108 811 A (NAKAMURA TAKAHIKO ET AL) 22 August 2000 (2000-08-22)<br>* abstract *<br>* column 4, line 62 - column 6, line 9; figures 1,2 *<br>* column 7, line 27 - column 8, line 8; figures 7-9 * | 1,10 | **TECHNICAL FIELDS SEARCHED (Int.Cl.7)**<br><br>G11B |
| A | T NISHIYA AND H YAMAKAWA: "PERD: Partial Error Response Detection" IEEE TRANSACTIONS ON MAGNETICS,US,IEEE INC. NEW YORK, vol. 31, no. 6, November 1995 (1995-11), pages 3042-3044, XP002120849 ISSN: 0018-9464<br>* the whole document * | 1-14 | |

-/--

The present search report has been drawn up for all claims

| Place of search | Date of completion of the search | Examiner |
|---|---|---|
| MUNICH | 4 September 2001 | Sucher, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 01 83 0422

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | NISHIYA T ET AL: "TURBO-EEPRML: AN EEPR4 CHANNEL WITH AN ERROR-CORRECTING POST-PROCESSOR DESIGNED FOR 16/17 RATE QUASI-MTR CODE" IEEE GLOBAL TELECOMMUNICATIONS CONFERENCE,US,NEW YORK, NY: IEEE, 1998, pages 2706-2711, XP000801537 ISBN: 0-7803-4985-7 * the whole document * | 1-14 | |
| A | WOOD R: "TURBO-PRML: A COMPROMISE EPRML DETECTOR" IEEE TRANSACTIONS ON MAGNETICS,US,IEEE INC. NEW YORK, vol. 29, no. 6, 1 November 1993 (1993-11-01), pages 4018-4020, XP000429520 ISSN: 0018-9464 * the whole document * | 1-14 | |
| A | HAGENAUER J ET AL: "A VITERBI ALGORITHM WITH SOFT-DECISION OUTPUTS AND ITS APPLICATIONS" COMMUNICATIONS TECHNOLOGY FOR THE 1990'S AND BEYOND. DALLAS, NOV. 27 - 30, 1989, PROCEEDINGS OF THE GLOBAL TELECOMMUNICATIONS CONFERENCE AND EXHIBITION(GLOBECOM), NEW YORK, IEEE, US, vol. 3, 27 November 1989 (1989-11-27), pages 1680-1686, XP000091258 | | TECHNICAL FIELDS SEARCHED (Int.Cl.7) |

The present search report has been drawn up for all claims

| Place of search | Date of completion of the search | Examiner |
|---|---|---|
| MUNICH | 4 September 2001 | Sucher, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 01 83 0422

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2001

| Patent document cited in search report | | Publication date | Patent family member(s) | | Publication date |
|---|---|---|---|---|---|
| US 5949831 | A | 07-09-1999 | JP | 11025602 A | 29-01-1999 |
| | | | SG | 72817 A | 23-05-2000 |
| EP 1054401 | A | 22-11-2000 | JP | 2001024519 A | 26-01-2001 |
| US 5689532 | A | 18-11-1997 | US | 5521945 A | 28-05-1996 |
| | | | DE | 751519 T | 15-05-1997 |
| | | | EP | 0751519 A | 02-01-1997 |
| | | | JP | 9018356 A | 17-01-1997 |
| | | | SG | 50730 A | 20-07-1998 |
| WO 0007187 | A | 10-02-2000 | US | 6185173 B | 06-02-2001 |
| | | | AU | 5238499 A | 21-02-2000 |
| | | | EP | 1101224 A | 23-05-2001 |
| US 6108811 | A | 22-08-2000 | JP | 3154679 B | 09-04-2001 |
| | | | JP | 10178355 A | 30-06-1998 |
| | | | CA | 2217044 A | 18-04-1998 |
| | | | CN | 1181663 A | 13-05-1998 |
| | | | FR | 2754960 A | 24-04-1998 |

EPO FORM P0459

For more details about this annex : see Official Journal of the European Patent Office, No. 12/82